# EUROPEAN PATENT APPLICATION

(11) **EP 1 168 349 A2**
(43) Date of publication of application: **02.01.2002**
(21) Application number: 01305082.8
(22) Date of filing: 11.06.2001
(51) Int. Cl.: G11B 33/00

(54) **Disc holding devices and disc accommodating casings**

(30) Priority: 12.06.2000 JP 2000175851
(71) Applicant: SONY CORPORATION, Tokyo 141 (JP); START LAB INC., Tokyo (JP)
(72) Inventor: Ishii, Hirohisa, c/o Start Lab Inc, Chiyoda-ku, Tokyo (JP)
(74) Representative: Pilch, Adam John Michael

(57) **Abstract**

A disc holding mechanism enables a disc-shaped recording medium to be held easily and reliably without e.g., a finger end of a user directly contacting the recording medium to prevent the recording surface of the recording medium from being damaged. To this end, the disc holding mechanism includes an engaging section (51), engaged in a center opening (3) of an optical disc (2), a gripping section (52), for gripping the optical disc (2) engaged in the engaging section (51), and a releasing member (53) having releasing pieces (68) abutted by a holding area (4) on the outer peripheral side of the center opening (3) of the optical disc (2) to cause movement of the optical disc (2) in a direction (al) for releasing the engaged state of the optical disc (2) with the engaging section (51).

## Description

This invention relates to a disc holding device for holding a disc, such as an optical disc or a magneto-optical disc, and to a disc accommodating casing for accommodating such a disc.

There is at present known an optical disc, such as a CD-R (Compact Disc-Recordable), which permits information once-writing, or a CD-RW (Compact Disc-Rewritable), which permits information rewriting.

This sort of the optical disc is formed as a disc having a center opening. The optical disc has, on the outer peripheral side of the center opening, a holding area held by a disc rotating driving mechanism provided on the recording and/or reproducing apparatus when the information is to be recorded and/or reproduced by the recording and/or reproducing apparatus. On the outer peripheral side of the holding area is formed a recording area in which to record the information. That is, the optical disc includes a holding area, as a non-recording area, on an outer peripheral side of the center opening thereof.

On the recording surface side of the optical disc, irradiated with the laser light, there are formed, on an outer peripheral side of the holding area, a plurality of fine protection projections, along the direction of the disc thickness, for protecting the recording surface. So, when plural optical discs are stacked along the direction of the disc thickness, the projections on one disc abut against the neighboring other optical disc to protect the disc recording surface.

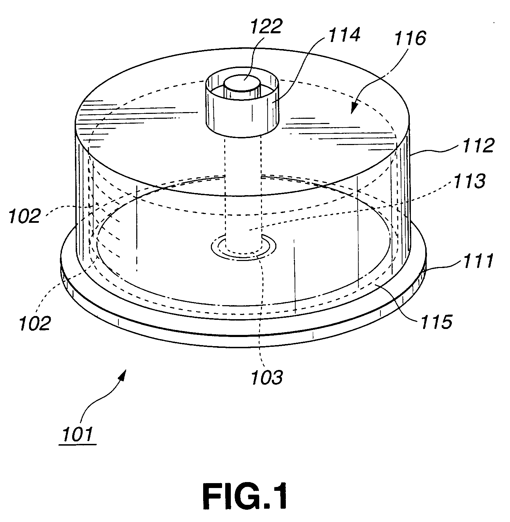

Referring to Fig.1, these optical discs are transported as they are stacked in a direction of disc thickness and housed in this state within a disc accommodating casing 101 shown for example in Fig.1.

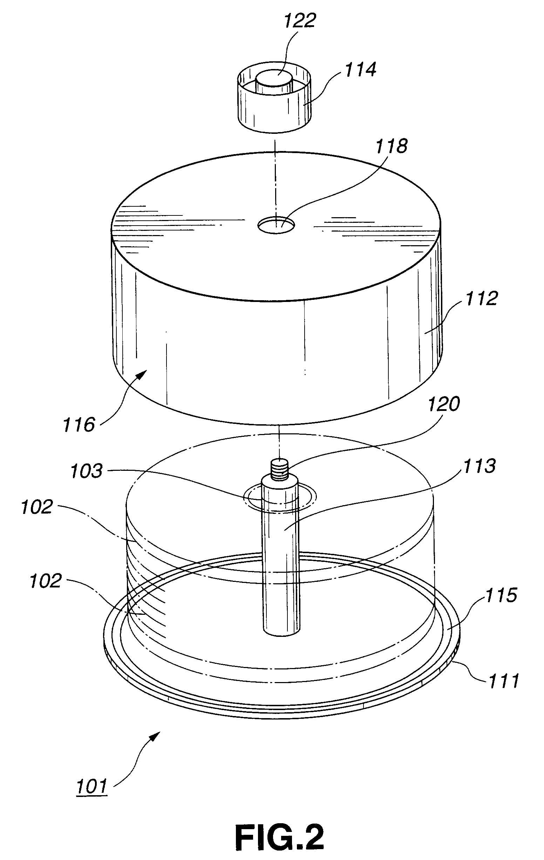

Referring to Figs.1 and 2, a conventional disc accommodating casing 101 includes a setting table 111 on which plural optical discs 102 are set in a state of being stacked along the direction of the disc thickness, and a casing 112 for housing the plural optical discs 102 stacked together and set on the setting table 111.

Referring to Figs.1 and 2, the disc accommodating casing 101 includes a guide shaft 113 passed through the center opening 103 of the optical disc 102 set on the setting table 111 for positioning the optical disc 102 at a pre-set position on the setting table 111, with the center opening 103 as a reference, and a mounting member 114 for fixedly mounting the casing 112 on the setting table 111.

Referring further to Figs.1 and 2, the setting table 111 is formed from e.g., a resin material as a disc having a diameter larger than the outside diameter of the optical disc 102, and includes a mounting hole, not shown, at the center of a setting surface, for mounting the guide shaft 113 therein. On the setting surface of the setting table 111, there is formed an annular groove 115 for extending along its outer periphery for setting the casing 112 with an opening in the casing 112 being in position with respect to the setting table 111.

Still referring to Figs.1 and 2, the casing member 112 is formed as a bottomed cylinder from e.g., a transparent resin material, and includes a disc accommodating section 116 for accommodating plural optical discs 102 set in stacked state on the setting table 111. The disc accommodating section 116 has an inner diameter larger than the outer diameter of the optical disc 102. The casing member 112 also has a shaft opening 118 passed through by the guide shaft 113, as shown in Fig.2.

Referring to Fig.2, the guide shaft 113 is formed to a pre-set length corresponding to the thickness of the plural optical discs 10 stacked together. The distal end of the guide shaft 113 is formed integrally with a threaded portion 120 for securing the mounting member 114. The guide shaft 113 is set upright on the setting table 111 by having one end press-fitted in the mounting hole of the setting table 111 and secured therein with an adhesive.

The mounting member 114 is substantially cylindrically-shaped, as shown in Figs.1 and 2, and a connecting unit 122, connected to the distal end of the guide shaft 113, is formed on the inner periphery thereof. The connecting unit 122 of the mounting member 114 is provided with a threaded portion, not shown, adapted to be engaged with a threaded portion 120 of the guide shaft 113.

In the above-described conventional disc accommodating casing 101, the optical discs 102 are set on the setting table 111 as the guide shaft 113 is passed through the center opening 103 of each optical disc 102. So, each optical disc 102 is placed on the setting table 111 of the disc accommodating casing 101 with the center opening 103 as reference.

In the disc accommodating casing 101, a pre-set number of the optical discs 102, stacked together along the direction of disc thickness, are placed on the setting table 111, and subsequently the casing member 112 is housed in the disc accommodating section 116 for covering the optical discs 102, with the opening side of the casing member 112 engaging in the mating groove in the setting table 111. When the casing member 112 set on the setting table 111, a threaded portion of a connecting section 122 of the mounting member 114 is engaged with the threaded portion 120 of the guide shaft 113 protruded via the shaft opening 118, so that the casing member 112 is secured to the setting table 111 on rotating the mounting member 114.

When taking out the optical discs 102 housed in the disc accommodating casing 101, the mounting member 114 is rotated to release the mounting state of the casing member 112 on the setting table 111 to enable the casing member 112 to be taken out from the setting table 111. The optical disc 102, through the center opening 103 of which the guide shaft 113 is passed, is extracted from the guide shaft 113 and taken out, as the outer periphery of the optical disc 102 set on the setting table 111 is held with the finger end.

In the above-described conventional disc accommodating casing 101, when the optical disc 102 housed therein is to be taken out, the mounting member 114 has to be rotated to release the mounting state of the casing member 112 relative to the setting table 111 to take out the casing member 112 from the setting table 111. Thus, a problem is raised that the operation of taking out the optical disc 102 is complex, while the preliminary operations are time-consuming.

In addition, in the conventional disc accommodating casing 101, there is raised a problem that, when the optical disc 102 housed in the disc accommodating section 116 is taken out, the optical disc has to be freed from the guide shaft 113 passed through its center opening 103, as the outer periphery of the optical disc 102 set on the setting table 111 is held with the finger end, thus necessitating relative skill in the disc taking-out operation. Moreover, for children with small palm size, it may be difficult to hold the outer periphery of the optical disc 102.

In the conventional disc accommodating casing 101, there is also raised a problem that, when taking out the optical disc 102 housed in the disc accommodating section 116, the finger end may touch the recording surface to leave a fingerprint thereon. In particular, in the case of the optical disc 102 having an improved recording density, the recording performance may be affected significantly by the fingerprint left on its recording surface. Although a glove may be worn to prevent the fingerprint from becoming affixed to the recording surface of the optical disc, it may be feared that operability may thereby be affected significantly.

It is therefore an aim of at least an embodiment of the present invention to provide a disc holding device whereby the disc-shaped recording medium can be held easily reliably without the finger end directly touching the disc-shaped recording medium to enable the disc-shaped recording medium to be protected against possible damage.

It is another aim provide a disc holding device whereby the disc-shaped recording medium housed in the disc accommodating section may be taken out easily without finger end directly touching the disc-shaped recording medium.

In one aspect, the present invention provides a disc holding device including an engaging section engaged in a center opening in a disc-shaped recording medium, a gripping section for gripping the disc-shaped recording medium engaged by the engaging section and a releasing section including an operating piece abutted against a holding area lying on the outer peripheral side of the center opening of the optical disc. The holding area is an area held by a recording and/or reproducing apparatus. The operating piece causes movement of the disc-shaped recording medium in a direction of disengaging the engaging section and the disc-shaped recording medium from each other.

In this disc holding device, the gripping section is gripped, with the engaging section engaging in the center opening of the disc-shaped recording mediums, so that the disc-shaped recording medium is held without the finger end of the user touching the optical disc. In this disc holding device, the releasing section is operated so that the operating piece of the releasing section compresses against the holding area of the disc-shaped recording medium to cause movement of the disc-shaped recording medium in a direction of disengaging the center opening from the engaging section. That is, the releasing section is acted on to cause the operating piece to compress against the holding area of the disc-shaped recording medium to disengage the center opening from the engaging section to detach the disc-shaped recording medium from the engagement section.

In another aspect, the present invention provides a disc accommodating casing including a casing member having a housing section for housing a plurality of disc-shaped recording mediums as the recording mediums are stacked together in the direction along the disc thickness, an insertion/dismounting opening for inserting/dismounting the disc-shaped recording medium into or from the housing section, and a setting section formed on the bottom surface section of the housing section, and a lid intrudable from the insertion/dismounting opening into the housing section for opening/closing the insertion/dismounting opening. The setting section is a section on which is set a holding area held by a recording and/or reproducing apparatus, and the holding area is provided on an outer peripheral side of a center opening of the disc-shaped recording medium. The lid has an engaging section engaging with the center opening of the disc-shaped recording medium housed in the housing section of the casing member, a gripping section for gripping the disc-shaped recording medium engaged by the engaging section, and a releasing section including an operating piece abutting against the holding area of the disc-shaped recording medium for causing movement of the disc-shaped recording medium in a direction of releasing the engagement of the disc-shaped recording medium.

The disc accommodating casing is held by the lid by the disc-shaped recording medium housed in the housing section engaging with the engagement section of the disc holding mechanism of the lid. On the other hand, if the releasing section of the disc holding mechanism is acted on, the operating piece compresses against the holding area of the disc-shaped recording medium to disengage the center opening from the engaging section so that the disc-shaped recording medium held by the lid is detached from the engaging section.

A disc holding device according to a preferred embodiment of the present invention enables the disc-shaped recording medium to be held easily reliably without the finger end of the user directly touching the disc-shaped recording medium to prevent the recording surface of the disc-shaped recording medium from becoming damaged.

A disc accommodating casing according to a preferred embodiment of the present invention enables the disc-shaped recording medium housed in the disc accommodating section to be taken out easily without the finger end of the user directly touching the disc-shaped recording medium. Moreover, the disc accommodating casing of the present invention enables the disc-shaped recording medium to be held easily reliably to prevent the recording surface of the disc-shaped recording medium from becoming damaged.

The invention will now be described by way of example with reference to the accompanying drawings, throughout which like parts are referred to by like references, and in which:
Fig. 1 is a perspective view showing a known disc accommodating casing;
Fig.2 is an exploded perspective view showing the known disc accommodating casing;
Fig.3 is a perspective view showing a disc accommodating casing according to an embodiment of the present invention;
Fig.4 is a longitudinal cross-sectional view showing a casing member of the disc accommodating casing;
Fig.5 is a longitudinal cross-sectional view showing a lid of the disc accommodating casing;
Fig.6 is a perspective view for illustrating the grooving for ventilation;
Fig.7 is a longitudinal cross-sectional view showing a disc holding mechanism of the disc accommodating casing;
Fig.8 is a longitudinal cross-sectional view showing the state in which an engaging portion of the disc holding mechanism is being engaged in a center opening in the optical disc;
Fig.9 is a longitudinal cross-sectional view showing the state in which an engaging portion of the disc holding mechanism has been engaged in a center opening in the optical disc;
Fig. 10 is a longitudinal cross-sectional view showing the state in which a pre-set number of optical discs have been housed in the disc accommodating casing; and
Fig. 11 is a longitudinal cross-sectional view showing a packaged state of the disc accommodating casing.

Referring to the drawings, a preferred embodiment of a disc accommodating casing having a disc holding mechanism according to the present invention will be explained in detail.

An optical disc housed in the disc accommodating casing embodying the present invention is such an optical disc which permits information once-writing or rewriting, such as CD-R or CD-RW.

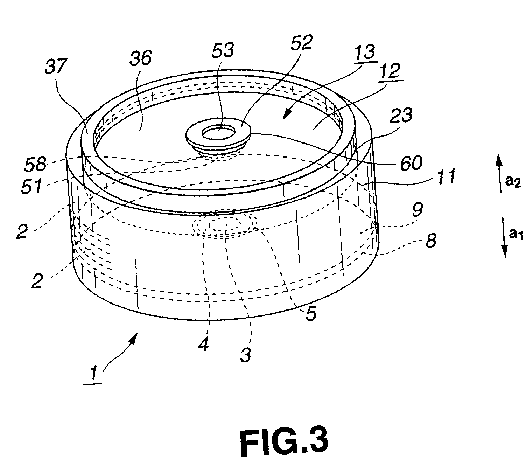

Referring to Fig.3, the optical disc 2 of this sort is formed as a disc having a center opening 3. The optical disc 2 has, on the outer peripheral side of the center opening 3, a holding area 4 held by a disc rotating driving mechanism on the recording and/or reproducing apparatus when the information is to be recorded and/or reproduced by a recording and/or reproducing apparatus, not shown. On the outer peripheral side of the holding area 4 is formed a recording area in which to record the information. That is, the optical disc includes the holding area 4, as a non-recording area, in the vicinity of the outer peripheral side of the center opening 3.

On the recording surface side of the optical disc, irradiated with the laser light, there are formed, on an outer peripheral side of the holding area 4, a plurality of fine protection projections, along the direction of the disc thickness, for protecting a recording surface 8. Thus, when plural optical discs are stacked along the direction of the disc thickness, the protection projections on one disc abut against the neighboring other optical disc to protect the recording surfaces. The reverse side of the optical disc 2, opposite to its recording surface 8, is a label surface 9 for demonstrating letters or figures, such as titles for the recording contents.

The disc accommodating casing 1 for housing the optical disc 2 is hereinafter explained.

Referring to Fig.3, the disc accommodating casing 1 according to the present invention includes a casing member 11, having a disc accommodating section 14, in which to accommodate plural optical discs 2, 2, stacked together along the direction of the disc thickness, a lid 12 mounted for movement in the direction indicated by arrows a1 and a2 in the disc accommodating section 14 for opening/closing the disc accommodating section 14, and a disc holding mechanism 13 for holding the optical discs 2, 2 housed in the casing member 11.

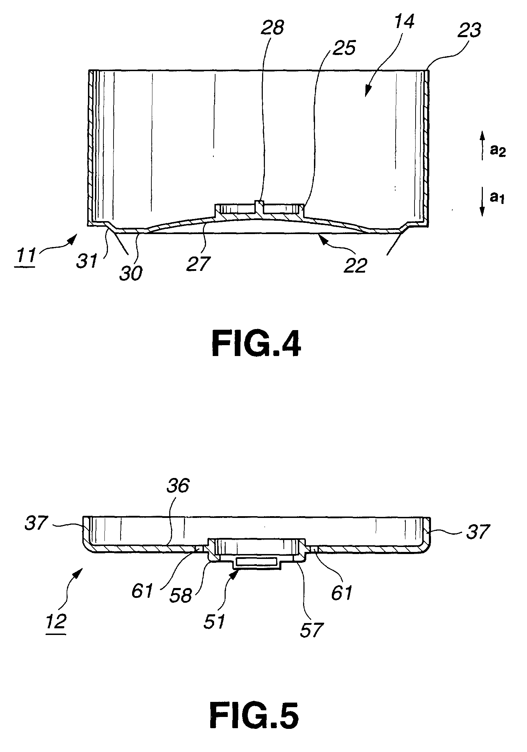

Referring to Fig.4, the casing member 11 is formed of a flexible resin material in the form of a cylinder having a bottom surface 22, and includes a disc accommodating section 14 in which to hold plural optical discs 2, 2 stacked together along the direction of the disc thickness. The disc accommodating section 14 has an inner diameter slightly larger than the outer diameter of the optical discs housed therein. The disc accommodating section 14 has a depth larger than the overall thickness of the pre-set number of the optical discs stacked along the direction of the disc thickness, in such a manner as to permit intrusion of the lid 12 into the disc accommodating section 14 when the pre-set number of the optical discs are housed therein.

The casing member 11 is also provided, at a location opposite to the bottom surface 22 thereof, an insertion/dismounting opening 23 through which to insert or dismount the optical discs 2, 2 into or from the disc accommodating section 14.

The bottom surface 22 of the casing member 11 is formed integrally with a toroidally-shaped setting portion 25 on which to set the holding area 4 around the center opening 3 of the optical disc 2. The setting portion 25 is slightly protruded in an upward direction. The optical disc 2, housed in the disc accommodating section 14, has the holding area 4 placed on the setting portion 25 to prevent the recording surface 8 from compressing against the bottom surface 22 to prevent possible damages to the recording surface 8.

At a mid portion of the bottom surface 22 of the casing member 11 is formed a control portion 27 for restricting idle movement of the optical disc 2 housed in the disc accommodating section 14. The control portion 27 is substantially arcuate in cross-section and is protruded slightly inwardly towards the interior of the disc accommodating section 14. Referring to Fig.4, the control portion 27 is formed so as to be elastically deformed in the direction indicated by arrow a1 parallel to the direction of thickness of the optical disc 2 accommodated in the disc accommodating section 14.

With the control portion 27, the optical discs 2, 2, housed in the disc accommodating section 14 and positioned in a spacing between the bottom surface 22 and the lid 12, is moved through the lid 12 in the direction indicated by arrow a1 to deform the control portion 27 elastically in the direction indicated by arrow a1 to afford the force of elasticity to the optical disc in a direction along its thickness to hold the optical disc 2 reliably between the bottom surface 22 and the lid 12.

The mid portion of the setting portion 25 of the bottom surface 22 of the casing member 11 is formed integrally with a lug 28 for positioning the optical discs 2, 2, stacked along the direction of the disc thickness, with respect to the disc accommodating section 14. This positioning lug 28 has its distal end protruded from the setting surface of the setting portion 25.

It is noted that a set of unused optical discs 2, 2 are furnished to the user as these optical discs 2, 2 are housed in the casing member 11. In order to re-use a void casing member 11 after the totality of the optical discs 2, 2 housed in the casing member 11 have been put to use, it is contemplated to re-accommodate a new set of unused optical discs 2, 2 in the casing member 11.

In such case, this new unused optical disc set may be furnished in another configuration , which is not shown, in which, as plural optical discs 2, 2 are stacked together in the direction along the disc thickness, the discs are held by a holding shaft engaged in the center openings 3 of these optical discs 2, 2. One end of the holding shaft is provided with an engagement hole engaged by the positioning lug 28 of the casing member 11. With the optical discs 2, 2, furnished in this configuration, the plural optical discs 2, 2 held by the holding shaft may be intruded into the disc accommodating section 14 so that the positioning lug 28 of the casing member 11 will be engaged in the engagement opening in one end of the holding shaft to permit the plural optical discs 2,2 to be positioned easily with respect to the disc accommodating section 14. By extracting the holding shaft from the center openings 3 of the optical discs 2, 2, the new set of the optical discs 2, 2, stacked together in the direction along the disc thickness, can easily be introduced and housed in the casing member 11 by way of re-loading.

Referring to Fig.4, an annular engaging section 30, adapted for engaging with the lid 12 of the neighboring disc accommodating casing when a number of disc accommodating casings 1 are stacked and set, is formed integrally in an outer peripheral region of the control portion 27 on the bottom surface 22 of the casing member 11. The annular engaging section 30 is formed so as to be projected slightly outwards from the bottom surface 22. On the outer peripheral side of the annular engaging section 30 is formed a guide surface 31, inclined with respect to the bottom surface 22, as shown in Fig.4, in order to permit the annular engaging section 30 to be readily engaged by the lid 12. This annular engaging section 30 allows to prevent the stacked disc accommodating casings 1 from being shifted in a direction parallel to the bottom surface 22..

The above-described casing member 11 is formed to a cylindrical shape in which the inner diameter of the disc accommodating section 14 is slightly larger than the outer diameter of the optical disc 2. Alternatively, the casing member 11 may be shaped such that the optical disc 2 can be housed in the disc accommodating section 14 with at least three points on the outer periphery of the optical disc 2 as the positioning reference. Specifically, the casing member 11 may be triangular or square in profile, with three or four points on the outer periphery of the optical disc 2 then being used as the positioning reference, respectively.

Referring to Fig.5, the lid 12 includes a major surface section 36 for opening/closing the insertion/dismounting opening 23 adapted for engaging or dismounting the casing member 11, and a guide section 37 for causing movement of the major surface section 36 in the direction substantially parallel to the bottom surface 22 of the disc accommodating section 14 as indicated by arrows a1 and a2. The major surface section 36 is disc-shaped, with the outer diameter slightly smaller than the inner diameter of the disc accommodating section 14, and may be intruded into the disc accommodating section 14 of the casing member 11 like a so-called dropped lid. The guide section 37 is formed integrally with and around the outer periphery of the major surface section 36 so as to be protruded towards the insertion/dismounting opening 23 when the major surface section 36 closes the insertion/dismounting opening 23. The guide section 37 has a pre-set width in a direction parallel to the disc accommodating section 14 in order to secure the guide action when the major surface section 36 of the lid 12 is moved within the disc accommodating section 14.

The width of the guide section 37 is set so that, when the insertion/dismounting opening 23 is closed, with a pre-set number of the optical discs accommodated in the disc accommodating section 14, the guide section 37 is protruded a pre-set amount of the order of a few millimeters from the insertion/dismounting opening 23 of the casing member 11. This protruding amount is set depending on the amount of elastic displacement of the control portion 27 of the casing member 11, such that, when the lid 12 is intruded into the inside of the disc accommodating section 14, as a pre-set number of the optical discs 2,2 are already housed in the disc accommodating section 14, with the control portion 27 being then deformed elastically, the end of the guide section 37 will be substantially flush with the edge of the insertion/dismounting opening 23.

If the guide section 37 is of such a width, the lid 12 may be prevented from becoming detached from the insertion/dismounting opening 23, when the lid 12 has been intruded into the inside of the disc accommodating section 14 to close the insertion/dismounting opening 23, thus optimally maintaining the state of closure of the insertion/dismounting opening 23.

There is provided a gap for ventilation, between the guide section 37 of the lid 12 and the inner periphery of the disc accommodating section 14, for establishing air communication from the inside of the disc accommodating section 14 closed by the major surface section 36 of the lid 12 to inside and outside of the casing member 11. Thus, when the lid 12 is moved in the disc accommodating section 14 in the direction indicated by arrows a1 and a2, that is in a direction towards and away from the bottom surface 22, the air in the disc accommodating section 14 is exhausted to outside via the gap for ventilation as the result of the lid movement. So, the lid 12 may be moved satisfactorily between the insertion/dismounting opening 23 and the bottom surface 22 without the lid movement being obstructed under the pneumatic pressure in the disc accommodating section 14 closed by the major surface section 36.

In the above-described lid 12, the gap of the pre-set width is provided between the guide section 37 and the inner periphery of the disc accommodating section 14. Alternatively, the gap between a guide section 43 of a lid 42 and the inner periphery of the disc accommodating section 14 may be smaller and plural grooves for ventilation 44 may be provided in the outer peripheral surface of the guide section 43 parallel to the direction of movement of the lid 42 in order to permit air influx/efflux into or from the inside of the disc accommodating section 14 closed by the lid 42. With such lid 42, in which the gap between the guide section 43 and the inner periphery of the disc accommodating section 14 is diminished, the guide action is improved to permit the lid to be moved more smoothly within the disc accommodating section 14.

In the above-described disc accommodating casing 1, the control portion 27 is provided on the bottom surface 22 of the casing member 11 for preventing idle movement of the optical disc 2 housed in the disc accommodating section 14. Alternatively, the control portion 27 may be provided on the major surface section 36 of the lid 12, or on each of the bottom surface 22 of the casing member 11 and the major surface section 36 of the lid 12 in a facing relation to each other.

The disc holding mechanism 13 is provided centrally of the major surface section 36 of the lid 12, as shown in Fig.3. This disc holding mechanism 13 includes an engaging section 51, engaged in the center opening 3 of the optical disc 2, a gripping section 52, for gripping the optical disc 2 engaged in the engaging section 51, and a releasing member 53 for releasing the engaged state of the optical disc 2 with the engaging section 51, as shown in Fig.5.

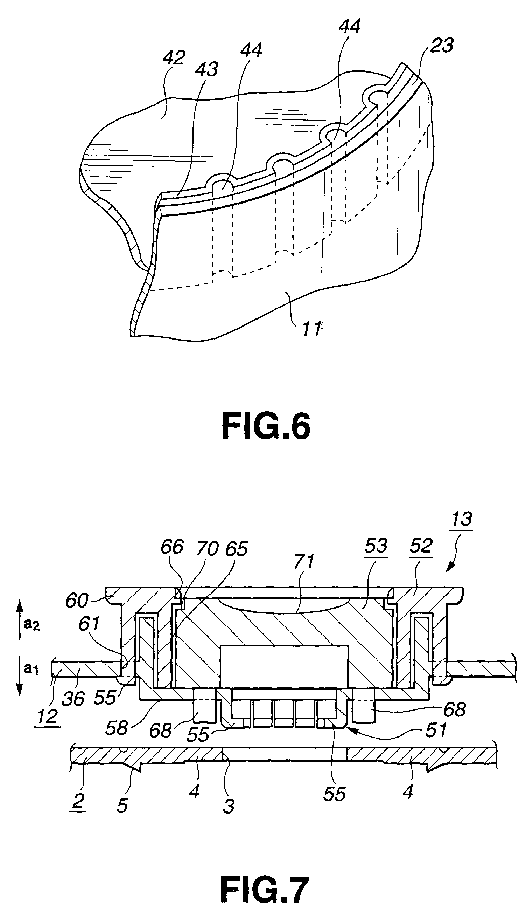

The engaging section 51 is formed integrally with a mid portion of the major surface section 36 of the lid 12, as shown in Fig.7. The engaging section 51 has plural engagement pawls 55,55 engaged in the center opening 3 of the optical disc 2. These engagement pawls 55,55 are arrayed radially in register with the inner periphery of the center opening 3 of the optical disc 2 so as to be elastically flexed in a radial direction of the center opening 3. That is, radially extending gaps are formed between neighboring engagement pawls 55, 55.

The major surface section 36 of the lid 12 is formed integrally with a projecting abutment 57, on the outer periphery of the engaging section 51, for compressing against the holding area 4 on the outer peripheral side of the center opening 3 of the optical disc 2, as shown in Figs.5 and 7. The abutment 57 has an abutting surface 58 for compressing against the holding area 4 of the optical disc 2, as shown in Figs.5 and 7, to prevent the label surface 9 of the optical disc 2 from compressing against the major surface section 36 of the lid 12.

The gripping section 52 is arranged on an outwardly facing portion of the major surface section 36 of the lid 12. The gripping section 52 is substantially cylindrically-shaped and has its end formed integrally with a flange-shaped gripping portion 60.

The gripping section 52 is formed integrally with the engagement pawls 55, 55 engaged by the major surface section 36 of the lid 12, as shown in Fig.7. These engagement pawls 55, 55 are introduced into and engaged with an engagement opening 61 formed in the major surface section 36 of the lid 12. Thus, the gripping section 52 is mounted on the major surface section 36 of the lid 12 via engagement pawls 55, 55 engaged in the opening 61 of the lid 12.

Inwardly of the gripping section 52 is formed a housing section 65 in adjacency to the engaging section 51 for accommodating the releasing member 53 so that the releasing member 53 will be movable in the direction indicated by arrow a1 and a2, as shown in Fig.7. In one end of the gripping section 52 is formed a circular operating opening 66 in which is moved the releasing member 53 provided in the housing section 65, as shown in Fig.7.

The releasing member 53 is substantially cylindrically-shaped, and is housed in the housing section 65 of the gripping section 52 for movement in the direction indicated by arrows a1 and a2 in Fig.7. The end face of the releasing member 53 facing the engaging section 51 is formed integrally with plural releasing pieces 68 extending along the outer periphery thereof for being projected towards the outer periphery of the engagement pawls 55,55 of the engaging section 51. These releasing pieces 68 are formed radially relative to the center of the major surface section 36 of the lid 12 in register with gaps defined between neighboring engagement pawls 55, 55 of the engaging section 51.

The releasing pieces 68 are formed to have an amount of protrusion sufficient to permit the detachment of the optical disc 2, having its center opening 3 engaged by the engaging section 51, from the engaging section 51, so that, as the releasing member 53 is moved in the direction indicated by arrow a1, the releasing pieces 68 are introduced into the gap of the engagement pawls 55,55 of the engaging section 51 so as to be projected towards the outer periphery of the engaging section 51 such as to disengage the engaging section 51 and the center opening 3 from the optical disc 2.

The outer periphery of an end of the releasing member 53 facing the operating opening 66 for acting on the gripping section 52 is cut out to form a step-shaped position controlling section 70 abutted by an edge of the operating opening 66 to restrict the movement in the direction indicated by arrow a2 of the releasing member 53. When the releasing member 53 is moved in the direction indicated by arrow a2, the position controlling section 70 abuts against the edge of the operating opening 66 of the gripping section 52 to prevent the releasing member 53 from becoming detached from the operating opening 66.

The releasing member 53 is formed centrally of the end thereof facing the operating opening 66 of the gripping section 52 with an operating recess 71 for thrusting such as with a finger end.

In the above-described disc holding mechanism 13, the releasing pieces 68 of the releasing member 53 are protruded via the gap of the neighboring engagement pawls 55, 55 of the engaging section 51. It is however sufficient if the disc holding mechanism 13 abuts in the holding area 4 of the optical disc 2. Thus, it is sufficient if a set of releasing shafts are adapted to be protruded on both sides of the center opening 3 of the optical disc 2, in a manner not shown.

In the above-described structure of the disc holding mechanism 13, the operation of holding the optical disc 2 and of releasing the holding state of the optical disc 2 is explained with reference to the drawings.

The engaging section 51 of the disc holding mechanism 13 is moved to the vicinity of the center opening 3 of the optical disc, disposed at the uppermost position of the plural optical discs 2, 2 housed in the disc accommodating section 14, and is introduced into the center opening 3, as the gripping portion 60 of the gripping section 52 is held with e.g., the finger end, as shown in Fig.7.

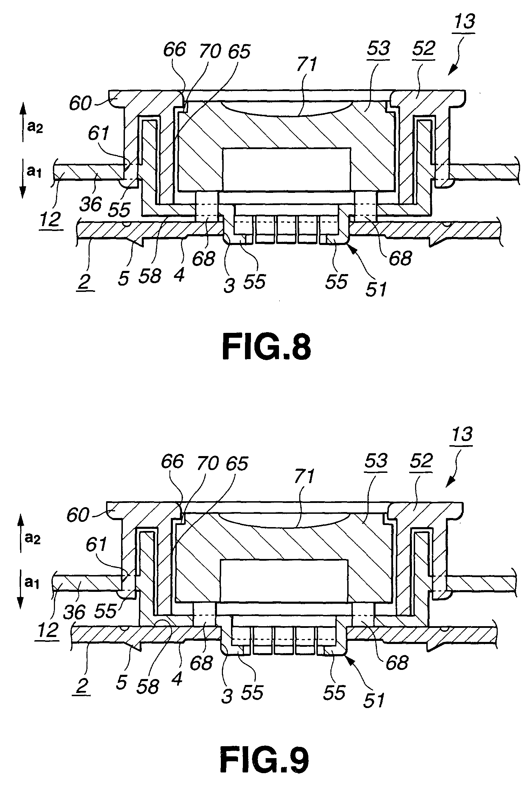

As the engaging section 51 is introduced into the center opening 3 of the optical disc 2, the engagement pawls 55, 55 of the disc holding mechanism 13 are elastically deformed in the radial direction of the center opening 3 into engagement with the center opening 3, as shown in Fig.8.

As the engagement pawls 55,55 of the engaging section 51 of the disc holding mechanism 13 are introduced into the center opening 3 of the optical disc 2, the releasing pieces 68 of the disc holding mechanism 13 are abutted against the holding area 4 of the optical disc 2, so that the releasing member 53 is moved in the direction indicated by arrow a2 in Fig.8.

As the engaging section 51 is further introduced into the center opening 3 of the optical disc 2, engaged by the engaging section 51, the holding area 4 on the outer peripheral surface of the center opening 3 compresses against the abutting surface 58, as shown in Fig.9.

For disengaging the optical disc 2 from the engaging section 51 of the disc holding mechanism 13, the releasing member 53 is moved in the direction indicated by arrow a1, such as with the finger end, as shown in Fig.9. As the releasing member 53 is moved in the direction indicated by arrow a1, the releasing pieces 68 compressing against the holding area 4 of the optical disc 2 are protruded via the gap between the engagement pawls 55, 55 of the engaging section 51 towards the holding area 4 to permit movement of the optical disc 2 in the direction indicated by arrow a1.

As the optical disc 2 engaged with the engaging section 51 of the disc holding mechanism 13 is further moved in the direction indicated by arrow a1 in Fig.7, the center opening 3 of the optical disc 2 is disengaged from the engaging section 51 to permit detachment of the optical disc 2 from the engaging section 51.

With the above-described structure of the disc accommodating casing 1, the operation of getting the optical disc 2 accommodated in the disc accommodating section 14 and of taking out the optical disc 2 therefrom, is now explained.

First, plural optical discs 2,2 are stacked together in the direction along the disc thickness and housed in this state with the sides of the recording surfaces 8 directing to the bottom surface 22. The lowermost one of the plural optical discs 2, 2, housed in the disc accommodating section 14, has its holding area 4 on the side of the recording surface 8 placed and supported on the setting section 25 of the bottom surface 22 of the casing member 11 to prevent the recording surface 8 of the optical disc 2 from compressing against the bottom surface 22 of the casing member 11. Consequently, the lowermost optical disc 2, housed in the disc accommodating section 14, may be protected against damages to the recording surface 8 by e.g., the bottom surface 22 of the casing member 11.

Since the recording surfaces 8 of the optical discs 2, 2, stacked together in the direction along the disc thickness and housed in this state in the disc accommodating section 14, are prevented by the protection lugs 5 on the recording surfaces 8 from contacting with the label surfaces 9 of the other discs 2, 2, so that the recording surfaces 8 may be reliably protected from damages. The optical discs 2,2 are housed in the disc accommodating section 14 with the outer disc diameter as reference.

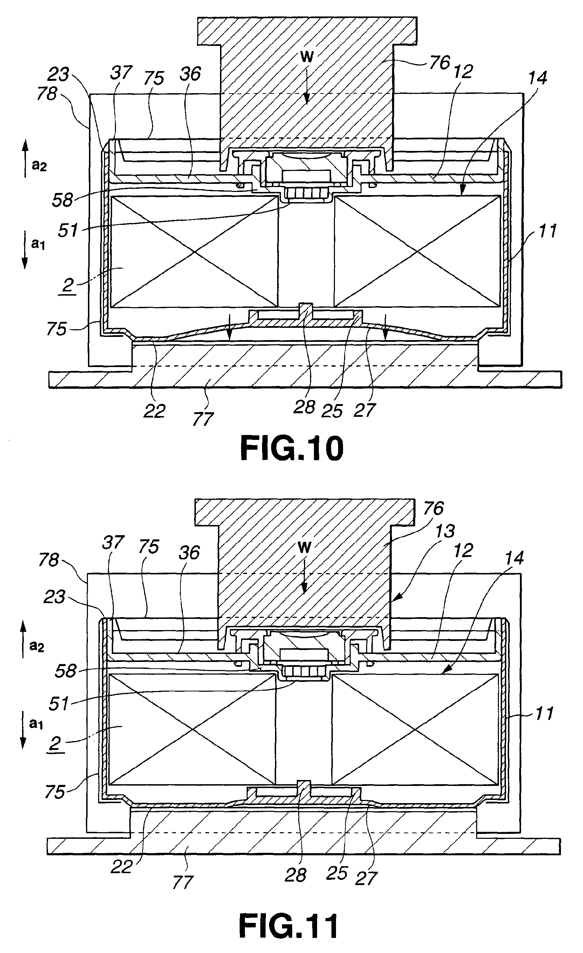

After the plural optical discs 2, 2, stacked together in the direction along disc thickness, are housed in the disc accommodating section 14 of the casing member 11, the lid 12 is intruded into the disc accommodating section 14 for stopping the insertion/dismounting opening 23. The disc accommodating casing 1, having its disc accommodating section 14 stopped by the lid 12, has its entire casing portion covered by a thermally contractible film 75, in the manner of packaging the entire casing portion, as shown in Fig.10.

The disc accommodating casing 1 is placed on a setting table 77 and, using a thrusting member 76 for thrusting the lid 12, the lid 12 is moved further in the direction indicated by arrow a1 under a pre-set thrusting pressure W, so that the plural optical discs 2, 2 housed in the disc accommodating section 14 are moved in the direction indicated by arrow a1 by this lid 12, as shown in Fig.10. As the optical discs 2, 2 in the disc accommodating section 14 are moved in the direction indicated by arrow a1, the control portion 27 on the bottom surface 22 of the casing member 11 is thrust in the direction indicated by arrow a1 to flex the control portion 27 substantially to the shape of a flat plate.

As the control portion 27 if the disc accommodating casing 1 is elastically deformed, the lid 12 is moved to a position substantially flush with the insertion/dismounting opening 23 of the casing member 11, as shown in Fig.10.

The disc accommodating casing 1, the entire casing portion of which has been covered by the film 75, is heated to a pre-set temperature by a heating device 78, as the control portion 27 remains flexed elastically, as shown in Fig.11. This thermally contracts the film 75 into tight contact with the outer periphery of the casing member 11 and the lid 12. In the disc accommodating section 14, the state of the lid 12 closing the insertion/dismounting opening 23 is maintained under the tension of the contracted film 75. The control portion 27 of the disc accommodating casing 1 is kept in its elastically flexed state, under the tension of the film 75, such that the plural optical discs 2,2 housed in the disc accommodating section 14 are reliably held in the spacing between the lid 12 and the control portion 27 under the elasticity of the control portion 27.

Thus, the optical discs 2,2, housed in the disc accommodating section 14, may be reliably prevented from performing idle movement in the direction along the disc thickness in the disc accommodating section 14. Thus, in the disc accommodating casing 1, the optical discs are not moved in idleness in the direction along the disc thickness under an external force such as vibrations imposed during transport, such as to prevent e.g., the recording surface 8 from being damaged.

In the disc accommodating casing 1, the control portion 27 in the casing member 11 is elastically restored to its arcuate cross-sectional shape, as the film 75 is peeled to eliminate the tension afforded thereby, with the optical disc 2 and the lid 12 in the disc accommodating section 14 being moved in the direction indicated by arrow a2.

When taking the optical disc 2 housed in the disc accommodating section 14, the gripping portion 60 of the disc holding mechanism 13 of the disc accommodating casing 1 is held such as with the finger end to shift the lid 12 into the inside of the disc accommodating section 14. When the lid 12 is moved into the inside of the disc accommodating section 14, the uppermost optical disc 2 is held by the lid 12 and ths taken out by the engaging section 51 of the disc holding mechanism 13 engaging with the center opening 3 of the uppermost optical disc 2.

The optical disc2, held by the lid 12, is transported to a desired location, such as to a respective apparatus, in a manner not shown. The optical disc 2, held by the lid 12, is disengaged from the engaging section 51, by acting on the releasing member 53 of the disc holding mechanism 13, whereby the optical disc is placed on e.g. a disc tray of the recording and/or reproducing apparatus. The lid 12 is again moved into the inside of the disc accommodating section 14 of the casing member 11, whereby the next optical disc 2, which is now the uppermost optical disc in the disc accommodating section 14, is taken out as it is engaged by the engaging section 51 of the disc holding mechanism 13.

In the above-described disc accommodating casing 1, in which the lid 12 can be dismounted easily from the casing member 11 so that the taking-out operation can be performed with one hand by the disc holding mechanism 13 provided on the lid 12, the time necessary in taking out the optical disc housed in the casing member 11 can be drastically reduced to one-tenth or less of that required in the above-described conventional disc accommodating casing, thus improving the operational efficiency.

Moreover, the disc accommodating casing 1, provided with the disc holding mechanism 13, is able to hold the optical disc 2 housed in the disc accommodating section 14 easily and positively. Furthermore, with the disc holding mechanism 13 provided to the disc accommodating casing 1, the optical disc can be stored and transported for loading on the recording and/or reproducing apparatus, without the finger end directly touching the optical disc 2, so that the recording surface 8 of the optical disc 2 may be reliably protected against deposition of a finger print mark or scratching and resulting damage to the recording surface.

In the above-described disc accommodating section 14, the disc holding mechanism 13 is arranged on the lid 12. Alternatively, the disc holding mechanism may be designed so that only the disc holding mechanism 13 represents an independent member.

It should be noted that the disc accommodating casing may be used with advantage for housing other types of the optical disc 2, such as DVD (digital versatile disc), characterized by its improved recording density.

## Claims

1. A disc holding device comprising:
an engaging section engaged in a center opening in a disc-shaped recording medium;
a gripping section for gripping said disc-shaped recording medium engaged by said engaging section; and
a releasing section including an operating piece abutted against a holding area lying on the outer peripheral side of said center opening of the optical disc, said holding area being an area held by a recording and/or reproducing apparatus, said operating piece causing movement of said disc-shaped recording medium in a direction of disengaging said engaging section and said disc-shaped recording medium from each other.

2. The disc holding device according to claim 1 having an abutment section compressing against said holding area of said disc-shaped recording medium engaged in said engaging section.

3. The disc holding device according to claim 1 wherein said engaging section has engaging pawls which are provided for elastic displacement in a direction along the radius of said center opening of the disc-shaped recording medium into engagement with at least two locations of the center opening of said disc-shaped recording medium.

4. A disc accommodating casing comprising:
a casing member having a housing section for housing a plurality of disc-shaped recording mediums as the recording mediums are stacked together in the direction along the disc thickness; an insertion/dismounting opening for inserting/dismounting the disc-shaped recording medium into or from said housing section, and a setting section formed on the bottom surface section of said housing section, said setting section being a section on which is set a holding area held by a recording and/or reproducing apparatus, said holding area being provided on an outer peripheral side of a center opening of said disc-shaped recording medium; and
a lid intrudable from said insertion/dismounting opening into said housing section for opening/closing said insertion/dismounting opening;
said lid having an engaging section engaging with said center opening of the disc-shaped recording medium housed in said housing section of said casing member, a gripping section for gripping said disc-shaped recording medium engaged by said engaging section and a releasing section including an operating piece abutting against said holding area of said disc-shaped recording medium for causing movement of said disc-shaped recording medium in a direction of releasing the engagement of said disc-shaped recording medium.

5. The disc accommodating casing according to claim 4 wherein said disc holding mechanism includes an abutment section compressing against the holding area of said disc-shaped recording medium engaged in said engaging section.

6. The disc accommodating casing according to claim 4 wherein said engaging section of said disc holding mechanism includes engagement pawls provided for elastic displacement in a radial direction of said center opening of said disc-shaped recording medium, said engagement pawls engaging with at least two portions of said center opening of said disc-shaped recording medium.

7. The disc accommodating casing according to claim 4 wherein said casing member includes an idling controlling section performing elastic displacement in a direction along the thickness of said disc-shaped recording medium, said idling controlling section operating for restricting idling movement along the direction of thickness of a plurality of disc-shaped recording mediums stacked together along the direction of thickness and housed in this state in said housing section.

8. The disc accommodating casing according to claim 4 wherein said casing member includes a guide section on its outer periphery facing the inner periphery of said housing section, said guide section permitting movement of said lid in a direction substantially perpendicular to the bottom surface of said housing section.

9. The disc accommodating casing according to claim 4 wherein a gap for ventilation is provided between the outer periphery of said lid and the inner periphery of said casing member, said gap for ventilation permitting communication of air in the housing section closed by said lid with inside and outside.

10. The disc accommodating casing according to claim 4 wherein engagement means are provided on an outer portion of the bottom surface section of said casing member, said engagement means causing said bottom surface section to be engaged with said insertion/dismounting openings or said lids of other disc accommodating casings when the disc accommodating casing is stacked on said other disc accommodating casings.

11. The disc accommodating casing according to claim 4 wherein positioning means are provided on an inner side of said bottom surface section of said casing member, said positioning means operating for positioning a supporting member relative to said housing section, said supporting member being inserted into center openings of a plurality of the optical discs, housed in said housing section in a state of being stacked along the disc thickness, for supporting said optical discs in the state of being stacked along the disc thickness.

12. The disc accommodating casing according to claim 7 wherein said lid is provided with a guide section on its outer peripheral portion facing the inner peripheral portion of said housing section to permit the lid to be moved in a direction substantially perpendicular to said bottom surface section of said housing section of said casing member, said guide section being protruded outwards from said insertion/dismounting opening;
said idle movement controlling section being provided on said casing member for being intruded into said housing section;
said guide section being protruded a pre-set amount corresponding to the elastic displacement of said idling controlling section.
